# EUROPEAN PATENT SPECIFICATION

(11) **EP 3 982 011 B1**
(45) Date of publication and mention of the grant of the patent: **14.02.2024**
(21) Application number: 20200169.9
(22) Date of filing: 06.10.2020
(51) Int. Cl.: F16H 61/30, F16H 61/00

(54) **GEAR BOX ACTUATOR WITH AN INTERNAL AIR CHANNEL**
GETRIEBEAKTUATOR MIT EINEM INTERNEN LUFTKANAL
ACTIONNEUR DE BOÎTE DE VITESSES COMPORTANT UN CANAL D'AIR INTERNE

(43) Date of publication of application: 13.04.2022
(73) Proprietor: ZF CV Systems Europe BV, 1170 Brussels (BE)
(72) Inventor: TRELA, Marcin, PL-57-100 Wroclaw (PL)
(74) Representative: Rabe, Dirk-Heinrich

(56) References cited:
- EP-A1- 0 921 333
- EP-A2- 0 797 008
- EP-A2- 1 462 681
- US-A- 3 298 483
- US-B2- 7 073 410

## Description

### TECHNICAL FIELD

The present invention relates to a gear box actuator that utilizes a compressed gaseous fluid as a force for actuating one or more actuating cylinders. In one particular implementation, the present invention relates to providing an internal air channel(s) to the gear box actuator. Furthermore, the gear box actuator of the present invention is utilized in a transmission control apparatus, which is used in e.g., a commercial vehicle such as a truck. Such transmission control apparatuses can alternatively be called as gearbox actuators.

### BACKGROUND ART

Air channels of gear box actuators s are often formed by tubes made of a flexible material or channels drilled (or milled) into a rigid material such as, for example, steel. Said air channels are generally attached to an outer wall of said gear box actuators to receive air or any other fluid from an external fluid source. For instance, such air channels can be simply considered as holes at an outer surface of the gear box actuators.

It is however known that the presence of such air channels may or may not require connectors attached to them serving as an interface between the air channels and said external fluid source. In certain cases, the air channels require external connectors and thus, resulting spatial constraints and/or functional constraints to be taken in to account when designing an assembly. Needless to say, the spatial and/or functional constraints may cause collision with other components.

On a different note, EP0921333A1 relates to a sealing structure of a control valve unit for an automatic gear of an automobile. In an embodiment, a groove is formed on a first sealing layer at an intermediate portion of the width of the first sealing layer and said second sealing layer is formed to fill up said groove. US2020072370 A1 discloses in an embodiment a pressure control apparatus that is mounted on, for example, transport equipment such as an automobile, and controls a pressure of oil (automatic transmission fluid (ATF)) which is supplied to a continuously variable transmission in the transport equipment, thereby driving the continuously variable transmission.

US3298483A relates to a gear control mechanism for cooperation with a shift bar or other operating member of a gearbox of an automotive vehicle, including a slave unit for attachment to the gearbox, and an operator's remote control unit. US 7 073 410 B2 relates to a hydraulic motor vehicle gearbox control unit with a hydraulic distribution plate, in which channels extend for hydraulic fluid.

### DISCLOSURE OF THE INVENTION

The present invention provides a gear box actuator. In an embodiment, the gearbox actuator that uses a lead frame as an air channel wall is disclosed. The gear box actuator comprises a housing with a groove that extends along a surface of the housing and a lead frame covering the groove, wherein the walls of the groove and the lead frame form an air channel of the gear box actuator. The term "housing", as used throughout the description and the claims, particularly refers to a piece of metal such as, for example, steel that has a compartment in which an element of the gear box actuator is accommodated. Moreover, the term "groove", as used throughout the description and the claims, particularly refers to an indentation, a recess or a cut-out in an otherwise plane side (or surface) of the housing. In this regard, the formulation "extends along a surface of the housing", as used throughout the description and the claims, particularly refers to a straight groove having a longitudinal axis that is parallel to the side. Moreover, the term "lead frame", as used throughout the description and the claims, particularly refers to a metal structure inside a chip package that carries signals from the die to the outside. In addition, the term "air channel", as used throughout the description and the claims, particularly refers to a channel for supplying compressed gaseous fluids such as compressed air to the pneumatic element.

The gear box actuator may further comprise a pneumatic cylinder, wherein the air channel is connected to a chamber in which the pneumatic cylinder is accommodated. The pneumatic cylinder may be accommodated in the housing. For example, the chamber may be formed in a metal block, wherein an air channel extends from the chamber to the groove that extends along the surface of the block

The gear box actuator may further comprise a valve block, wherein the air channel is connected to a port of the valve block.

I.e., the pneumatic cylinder may be actuatable by controlling the fluid flow through the valve block to the pneumatic cylinder.

The gear box actuator may further comprise a solenoid, wherein the solenoid is configured to control a fluid flow through the port of the valve block.

Hence, the gear box actuator may be an electropneumatic gear box actuator operable by an electropneumatic force.

The lead frame may have an opening and the air channel may be connected to the opening.

For example, the lead frame may be an elongated metal sheet with a hole that allows flowing a fluid across the lead frame.

The gear box actuator may further comprise a first sealing, wherein the first sealing is arranged between the valve block and the lead frame.

For instance, the first sealing may be made of a ring of flexible material that is accommodated in a groove in the valve block or the lead frame.

The gear box actuator may further comprise a second sealing, wherein the second sealing is arranged between the lead frame and the housing.

For example, the second sealing may be made of a ring of flexible material that is accommodated in a groove in the lead frame or the housing.

The method comprises forming a groove that extends along a surface of a housing of a pneumatic actuator, arranging a lead frame on the groove to form an air channel, and connecting the air channel to a port of a pneumatic valve.

The pneumatic actuator may be a pneumatic cylinder and the air channel may be configured to feed compressed air to the pneumatic cylinder.

The air channel may be connected to the pneumatic valve through an opening in the lead frame.

The method may further comprise arranging a first sealing around the port and an edge of the opening.

The method may further comprise controlling, by a solenoid, a fluid flow through the pneumatic valve.

The method may further comprise arranging a second sealing between the lead frame and the housing.

The method may further comprise controlling a voltage and/or a current applied to/conducted by the lead frame.

It will be appreciated that the features and attendant advantages of the disclosed device may be realized by the disclosed method and vice versa.

### Brief Description of Drawings

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 shows schematic cross-sectional views of elements of an exemplary gear box actuator;
Fig. 2 shows additional elements that may be added to the assembly shown in Fig. 1;
Fig. 3 shows additional elements that may be added to the assembly shown in Fig. 2;
Fig. 4 shows additional elements that may be added to the assembly shown in Fig. 3; and
Fig. 5 shows a flowchart of an exemplary method.

Notably, the drawings are not drawn to scale and unless otherwise indicated, they are merely intended to conceptually illustrate the structures and procedures described herein.

### DETAILED DESCRIPTION OF THE ACCOMPANYING DRAWING(S)

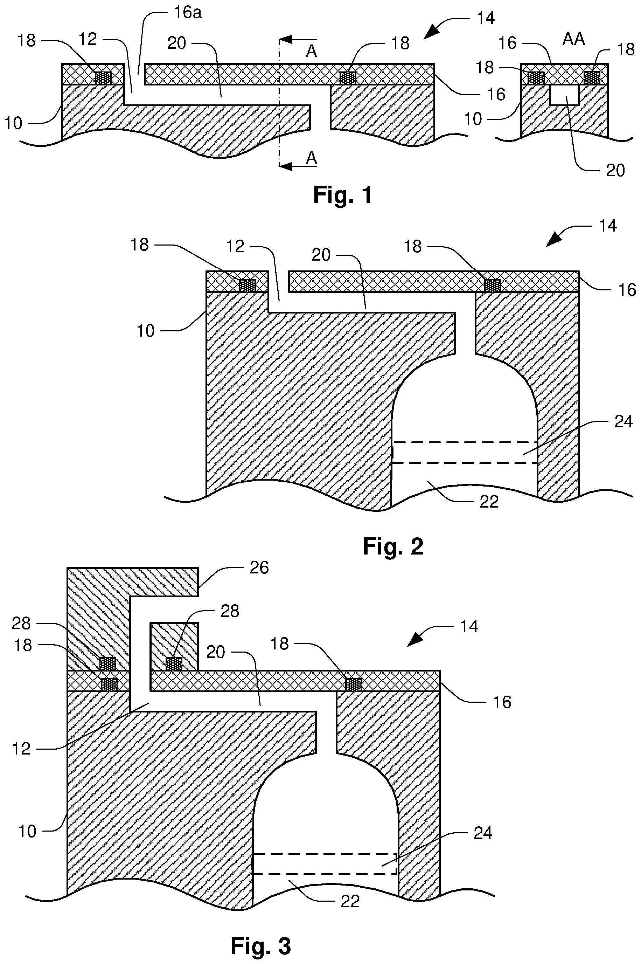

Referring now to Fig. 1, there is shown a housing 10 of a gear box actuator. In accordance with an embodiment of the present invention, the housing 10 is made of a Magnesium alloy. The technical advantage of using the Magnesium alloy for the housing 10 is it is light in weight and provides a tool life greater than other materials.

The housing 10 has a groove 12 that extends along a surface 14 of the housing 10. The groove 12 is covered by a lead frame 16 and airtightly sealed by a sealing 18 between the housing 10 and the lead frame 16, such that the walls of the groove 12 and the lead frame 16 form an air channel 20 of the gear box actuator. It is one of the technical advantages of the present invention in which the lead frame 16 provides means for e.g., air distribution within a chamber of the gear box actuator.

As illustrated in Fig. 1, the air channel 20 may have a rectangular cross-sectional shape. Notably, the air channel 20 may also have a circular or any other cross-sectional shape. The lead frame 16 may have an opening 16a (e.g., of a rectangular or circular shape) which is connected to the air channel 20 such that a gaseous fluid in the air channel 20 may flow through the opening 16a into or out of the air channel 20.

As illustrated in Fig. 2, the housing 10 may have a chamber 22 for a pneumatic element such as, for example a pneumatic cylinder 24. As the chamber 22 is connected to the air channel 20, the pneumatic element may be actuated by feeding the compressed gaseous fluid from the air channel 20 to the chamber 20 and/or by evacuating the compressed gaseous fluid from the chamber 20 through the air channel 20.

As illustrated in Fig. 3, the air channel 20 may be connected to a port of a valve block 26. The valve block 26 may be placed on top of the lead frame 16 such that the lead frame 16 is sandwiched between the housing 10 and the valve block 26. A contact area between the valve block 26 and the lead frame 16 may be airtightly sealed by a sealing 28 between the valve block 26 and the lead frame 16.

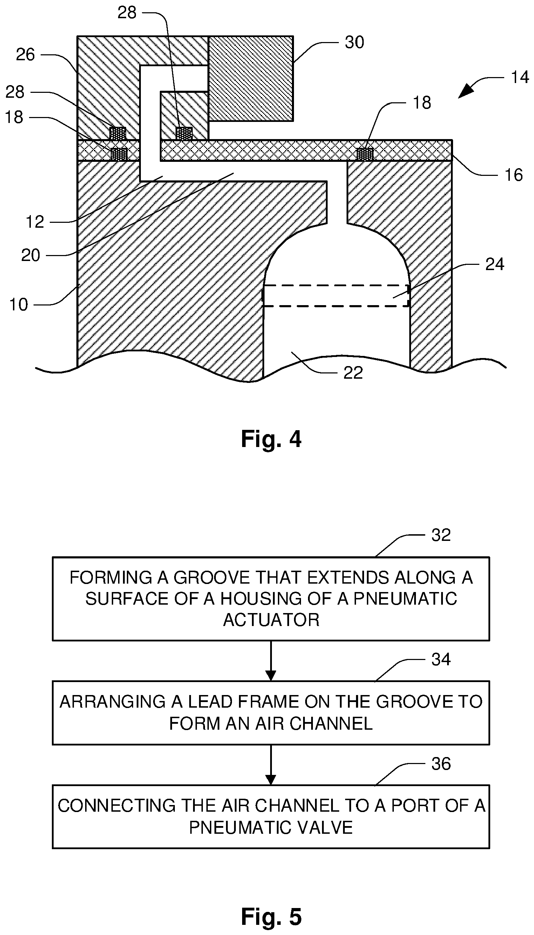

The sealing 28 may be a ring made of a flexible material which is accommodated in a notch in (a side of) the valve block 26. As schematically illustrated in Fig. 4, the fluid flow through the (port of the) valve block 26 may be controlled by a solenoid 30.

Fig. 5 shows a flowchart of a method of manufacturing the air channel 20. The method starts at step 32 by forming the groove 12 that extends along the surface 14 of the housing 10. The method is continued at step 34 by arranging the lead frame 16 on the groove 12 to form the air channel 20. At step 36, the air channel 20 is connected to a port of the pneumatic valve. During operation, a voltage and/or a current applied to/conducted by the lead frame 16 may be controlled by an active electrical component (e.g., an active electrical component of a microcontroller).

As the method relates to the manufacturing of the air channel 20, all aspects described in relation to the method also relate to the previously described elements and vice versa.

### List of Reference Numerals (part of the description)

- 10: housing
- 12: groove
- 14: surface
- 16: lead frame
- 16a: opening
- 18: sealing
- 20: air channel
- 22: chamber
- 24: pneumatic actuator (cylinder)
- 26: valve block
- 28: sealing
- 30: solenoid
- 32: process step
- 34: process step
- 36: process step

## Claims

1. A gear box actuator comprising:
a housing (10) with a groove (12) that extends along a surface (14) of the housing (10); and **characterised by**
a lead frame (16) covering the groove (12), wherein the walls of the groove (12) and the lead frame (16) form an air channel (20) of the gear box actuator.

2. The gear box actuator of claim 1, further comprising:
a pneumatic cylinder (24);
wherein the air channel (20) is connected to a chamber (22) in which the pneumatic cylinder (24) is accommodated.

3. The gear box actuator of claim 2, wherein the pneumatic cylinder (24) is accommodated in the housing (10).

4. The gear box actuator of any one of claims 1 to 3, further comprising:
a valve block (26);
wherein the air channel (20) is connected to a port of the valve block (26).

5. The gear box actuator of claim 4, further comprising:
a solenoid (30);
wherein the solenoid (30) is configured to control a fluid flow through the port of the valve block (26).

6. The gear box actuator of any one of claims 1 to 5, wherein the lead frame (16) has an opening (16a) and the air channel (20) is connected to the opening (16a).

7. The gear box actuator of claims 5 and 6, further comprising:
a first sealing (28);
wherein the first sealing (28) is arranged between the valve block (26) and the lead frame (16).

8. The gear box actuator of any one of claims 1 to 7, further comprising:
a second sealing (18);
wherein the second sealing (18) is arranged between the lead frame (16) and the housing (10).

9. A transmission control apparatus comprising the gear box actuator as claimed in any one of claims 1 to 8.

10. The transmission control apparatus of claim 9, wherein the gearbox actuator is electropneumatically operable.

11. A commercial vehicle comprising the transmission control apparatus of claim 9.

## Patentansprüche

1. Getriebeaktuator, umfassend:
ein Gehäuse (10) mit einer Nut (12), die sich entlang einer Oberfläche (14) des Gehäuses (10) erstreckt; und **gekennzeichnet durch** einen Anschlussrahmen (16), der die Nut (12) abdeckt, wobei die Wände der Nut (12) und des Anschlussrahmens (16) einen Luftkanal (20) des Getriebeaktuators ausbilden.

2. Getriebeaktuator nach Anspruch 1, ferner umfassend:
einen Pneumatikzylinder (24);
wobei der Luftkanal (20) mit einer Kammer (22) verbunden ist, in der der Pneumatikzylinder (24) aufgenommen ist.

3. Getriebeaktuator nach Anspruch 2, wobei der Pneumatikzylinder (24) in dem Gehäuse (10) aufgenommen ist.

4. Getriebeaktuator nach einem der Ansprüche 1 bis 3, ferner umfassend:
einen Ventilblock (26);
wobei der Luftkanal (20) mit einer Mündung des Ventilblocks (26) verbunden ist.

5. Getriebeaktuator nach Anspruch 4, ferner umfassend:
einen Magnetschalter (30);
wobei der Magnetschalter (30) konfiguriert ist, um einen Fluidstrom durch die Mündung des Ventilblocks (26) zu steuern.

6. Getriebeaktuator nach einem der Ansprüche 1 bis 5, wobei der Anschlussrahmen (16) eine Öffnung (16a) aufweist und der Luftkanal (20) mit der Öffnung (16a) verbunden ist.

7. Getriebeaktuator nach Anspruch 5 und 6, ferner umfassend:
eine erste Dichtung (28);
wobei die erste Dichtung (28) zwischen dem Ventilblock (26) und dem Anschlussrahmen (16) angeordnet ist.

8. Getriebeaktuator nach einem der Ansprüche 1 bis 7, ferner umfassend:
eine zweite Dichtung (18);
wobei die zweite Dichtung (18) zwischen dem Anschlussrahmen (16) und dem Gehäuse (10) angeordnet ist.

9. Übertragungssteuereinrichtung, umfassend den Getriebeaktuator nach einem der Ansprüche 1 bis 8.

10. Übertragungssteuereinrichtung nach Anspruch 9, wobei der Getriebeaktuator elektropneumatisch betreibbar ist.

11. Nutzfahrzeug, umfassend die Übertragungssteuereinrichtung nach Anspruch 9.

## Revendications

1. Actionneur de boîte de vitesses comprenant :
un boîtier (10) avec une rainure (12) qui s'étend le long d'une surface (14) du boîtier (10) ; et **caractérisé par** une grille de connexion (16) couvrant la rainure (12), dans lequel les parois de la rainure (12) et de la grille de connexion (16) forment un canal d'air (20) de l'actionneur de boîte de vitesses.

2. Actionneur de boîte de vitesses selon la revendication 1, comprenant en outre :
un cylindre pneumatique (24) ;
dans lequel le canal d'air (20) est relié à une chambre (22) dans laquelle le cylindre pneumatique (24) est logé.

3. Actionneur de boîte de vitesses selon la revendication 2, dans lequel le cylindre pneumatique (24) est logé dans le boîtier (10).

4. Actionneur de boîte de vitesses selon l'une quelconque des revendications 1 à 3, comprenant en outre :
un bloc de soupape (26) ;
dans lequel le canal d'air (20) est relié à un orifice du bloc de soupape (26).

5. Actionneur de boîte de vitesses selon la revendication 4, comprenant en outre :
un solénoïde (30) ;
dans lequel le solénoïde (30) est configuré pour réguler un écoulement de fluide à travers l'orifice du bloc de soupape (26).

6. Actionneur de boîte de vitesses selon l'une quelconque des revendications 1 à 5, dans lequel la grille de connexion (16) a une ouverture (16a) et le canal d'air (20) est raccordé à l'ouverture (16a).

7. Actionneur de boîte de vitesses selon les revendications 5 et 6, comprenant en outre :
une première étanchéité (28) ;
dans lequel la première étanchéité (28) est disposée entre le bloc de soupape (26) et la grille de connexion (16).

8. Actionneur de boîte de vitesses selon l'une quelconque des revendications 1 à 7, comprenant en outre :
une seconde étanchéité (18) ;
dans lequel la seconde étanchéité (18) est disposée entre la grille de connexion (16) et le boîtier (10).

9. Appareil de commande de transmission comprenant l'actionneur de boîte de vitesses selon l'une quelconque des revendications 1 à 8.

10. Appareil de commande de transmission selon la revendication 9, dans lequel l'actionneur de boîte de vitesses est actionnable par voie électropneumatique.

11. Véhicule utilitaire comprenant l'appareil de commande de transmission selon la revendication 9.
